# EUROPEAN PATENT APPLICATION

(11) **EP 3 418 998 A1**
(43) Date of publication of application: **26.12.2018**
(21) Application number: 17177515.8
(22) Date of filing: 22.06.2017
(51) Int. Cl.: G08G 1/0968, G01C 21/34, G06F 3/00, H04W 84/00, H04L 29/08

(54) **ROAD TRAFFIC MANAGEMENT**

(71) Applicant: Nokia Technologies Oy, 02610 Espoo (FI)
(72) Inventor: ROENNOW, Troels F., Cambridge CB2 9BG (GB); LI, Hongwei, Cambridge CB4 1RY (GB); BITAULD, David, Cambridge CB5 8DR (GB); MARTIN LOPEZ, Enrique, Cambridge CB4 3DN (GB); PALYUTINA, Karina, Cambridge CB4 2AW (GB)
(74) Representative: Evans, Marc Nigel

(57) **Abstract**

A technique, comprising: receiving at a node of a distributed ledger network one or more vehicle route requests shared among nodes of the distributed ledger network; computing one or more route solutions for said one or more vehicle route requests; and sharing said one or more route solutions with other nodes of said distributed ledger network, for establishing a consensus route solution for one or more of said one or more vehicle route requests.

## Description

Traffic management on roads is an increasingly demanding and important challenge, particularly in regions with high levels of road usage, such as modern large cities. The inventors for the present application have conducted research into new traffic management techniques.

There is hereby provided a method, comprising: receiving at a node of a distributed ledger network one or more vehicle route requests shared among nodes of the distributed ledger network; computing one or more route solutions for said one or more vehicle route requests; and sharing said one or more route solutions with other nodes of said distributed ledger network, for establishing a consensus route solution for one or more of said one or more vehicle route requests.

According to one embodiment, a consensus route solution for a vehicle request comprises the route solution computed and shared by the highest number of distributed ledger network nodes within a predetermined period of sharing time.

According to one embodiment, route solutions computed and shared by distributed ledger network nodes within a predetermined period of sharing time are recorded in a block of a block chain, and a consensus route solution for a vehicle request comprises the route solution recorded the most times within said block.

According to one embodiment, said computing comprises computing an individual route solution for each vehicle route request.

According to one embodiment, said computing comprises computing a group route solution for a plurality of said vehicle route requests, and the consensus route solution for a vehicle request comprises the route solution forming part of a group route solution voted for by the highest number of distributed ledger network nodes within a predetermined period of voting time from a plurality of group route solutions computed and shared between the distributed ledger network nodes within a predetermined period of sharing time.

According to one embodiment, votes for group route solutions are recorded in a block of a blockchain, and the consensus route solution for a vehicle request comprises the route solution having the most votes recorded in said block.

According to one embodiment, computing said one or more route solutions uses a plurality of inputs, at least one input comprising an output of a random number generator, and the method comprises initialising the random number generator using the same seed as other distributed ledger nodes during the same predetermined period of sharing time.

According to one embodiment, the method further comprises updating the local copy of the distributed ledger with information regarding a consensus among the distributed ledger network nodes about whether a vehicle was observed to comply with the consensus route solution established for the vehicle route request for the vehicle.

According to one embodiment, said consensus among the distributed ledger network nodes about whether a vehicle was observed to comply with the consensus route solution established for the vehicle route request for the vehicle is based on recorded observations by other vehicles about the location of the vehicle.

According to one embodiment, the method further comprises updating the local copy of the distributed ledger with information about application of a penalty to a vehicle that, according to a consensus among the distributed ledger nodes, did not comply with the consensus route solution established for the vehicle route request for the vehicle.

According to one embodiment, said computing is based at least on information recorded in a local copy of a distributed ledger, said information comprising at least information about a consensus achieved between nodes of said distributed ledger network on routes for earlier vehicle route requests processed by the distributed ledger network.

There is also hereby provided a method comprising: controlling or directing the operation of a vehicle to follow a route to a destination point, wherein the route is a consensus route established between nodes of a distributed ledger network for a vehicle route request for the vehicle based on: sharing of the vehicle route request between nodes of a distributed ledger network, computing of respective route solutions at the nodes of the distributed ledger network, and sharing of the computed route solutions between nodes of said distributed ledger network.

There is also hereby provided apparatus, comprising: means for receiving at a node of a distributed ledger network one or more vehicle route requests shared among nodes of the distributed ledger network; means for computing one or more route solutions for said one or more vehicle route requests; and means for sharing said one or more route solutions with other nodes of said distributed ledger network, for establishing a consensus route solution for one or more of said one or more vehicle route requests.

According to one embodiment, a consensus route solution for a vehicle request comprises the route solution computed and shared by the highest number of distributed ledger network nodes within a predetermined period of sharing time.

According to one embodiment, route solutions computed and shared by distributed ledger network nodes within a predetermined period of sharing time are recorded in a block of a block chain, and a consensus route solution for a vehicle request comprises the route solution recorded the most times within said block.

According to one embodiment, said means for computing comprises means for computing an individual route solution for each vehicle route request.

According to one embodiment, said means for computing comprises means for computing a group route solution for a plurality of said vehicle route requests, and the consensus route solution for a vehicle request comprises the route solution forming part of a group route solution voted for by the highest number of distributed ledger network nodes within a predetermined period of voting time from a plurality of group route solutions computed and shared between the distributed ledger network nodes within a predetermined period of sharing time.

According to one embodiment, votes for group route solutions are recorded in a block of a blockchain, and the consensus route solution for a vehicle request comprises the route solution having the most votes recorded in said block.

According to one embodiment, computing said one or more route solutions uses a plurality of inputs, at least one input comprising an output of a random number generator, and the apparatus further comprises means for initialising the random number generator using the same seed as other distributed ledger nodes during the same predetermined period of sharing time.

According to one embodiment, the apparatus further comprises means for updating the local copy of the distributed ledger with information regarding a consensus among the distributed ledger network nodes about whether a vehicle was observed to comply with the consensus route solution established for the vehicle route request for the vehicle.

According to one embodiment, said consensus among the distributed ledger network nodes about whether a vehicle was observed to comply with the consensus route solution established for the vehicle route request for the vehicle is based on recorded observations by other vehicles about the location of the vehicle.

According to one embodiment, the apparatus further comprises means for updating the local copy of the distributed ledger with information about application of a penalty to a vehicle that, according to a consensus among the distributed ledger nodes, did not comply with the consensus route solution established for the vehicle route request for the vehicle.

According to one embodiment, said computing is based at least on information recorded in a local copy of a distributed ledger, said information comprising at least information about a consensus achieved between nodes of said distributed ledger network on routes for earlier vehicle route requests processed by the distributed ledger network.

There is also hereby provided apparatus comprising: means for controlling or directing the operation of a vehicle to follow a route to a destination point, wherein the route is a consensus route established between nodes of a distributed ledger network for a vehicle route request for the vehicle based on: sharing of the vehicle route request between nodes of a distributed ledger network, computing of respective route solutions at the nodes of the distributed ledger network, and sharing of the computed route solutions between nodes of said distributed ledger network.

There is also hereby provided apparatus comprising: a processor and memory including computer program code, wherein the memory and computer program code are configured to, with the processor, cause the apparatus to perform any of the above methods.

There is also hereby provided a computer program product comprising program code means which when loaded into a computer controls the computer to: perform any of the above methods.

Embodiments are described in detail hereunder, by way of example, only with reference to the accompanying drawings, in which:
Figure 1 illustrates an example of a collection of distributed ledger network nodes each maintaining a local copy of the distributed ledger;
Figure 2 illustrates an example of apparatus for use at each distributed ledger network node;
Figure 3 illustrates an example of apparatus for use at a vehicle interacting with the distributed ledger network;
Figure 4 illustrates an example of operations at a distributed ledger network according to a first embodiment;
Figure 5 illustrates the propagation of a blockchain record for the first embodiment;
Figure 6 illustrates an example of operations at a distributed ledger network according to a second embodiment;
Figure 7 illustrates the propagation of a blockchain record for the second embodiment;
Figure 8 illustrates an example of operations at apparatus for a vehicle; and

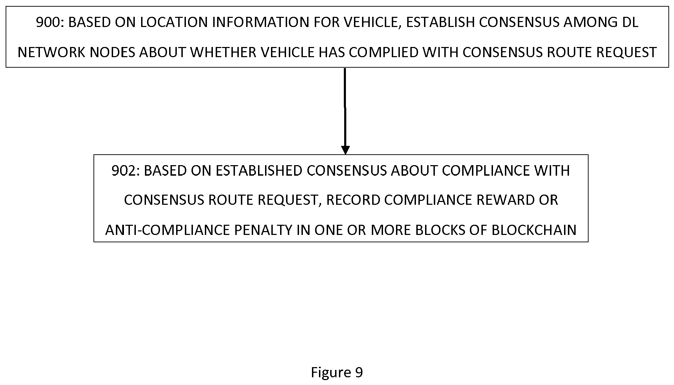

Figure 9 illustrates another example of operations at a distributed ledger network.

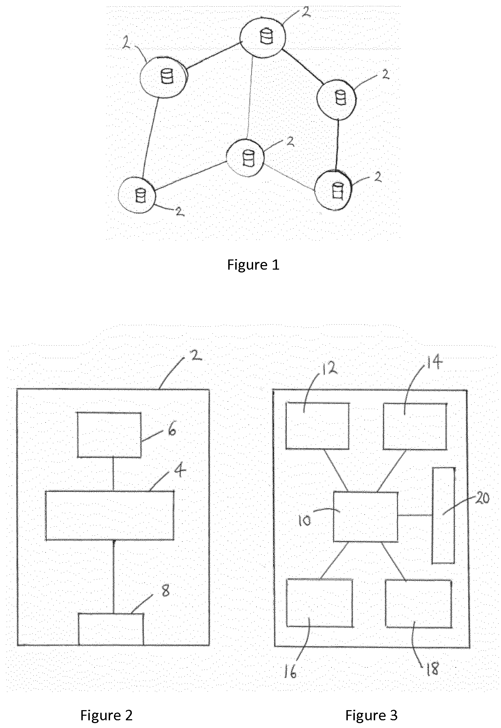

Figure 1 illustrates a group of interconnected nodes 2 operating a distributed ledger. Figure 1 only shows a small number of interconnected nodes, but a distributed ledger network (DLN) will typically comprise a much larger number of interconnected nodes, each maintaining in local memory a copy of a distributed ledger, which in the examples described below takes the form of a blockchain.

Figure 2 shows an example of apparatus for use at each node 2 of Figure 1. A processor 4 operates in accordance with program code stored at memory 6. Both the processor 4 and the memory 6 may be implemented as one or more chips. The memory 6 may include read-only memory, volatile memory, non-volatile memory and random-access memory. The above elements may be provided on one or more circuit boards. The apparatus also comprises an interface 8 for transferring data to and from one or more other nodes 2 of the distributed ledger network. It should be appreciated that the apparatus shown in Figure 2 described above may comprise further elements which are not directly involved with the embodiments of the invention described hereafter.

Figure 3 shows an example of apparatus for use at a vehicle interacting with the distributed ledger network. A processor 10 operates in accordance with program code stored at memory 12. Both the processor 10 and the memory 12 may be implemented as one or more chips. The memory 12 may include read-only memory, volatile memory, non-volatile memory and random-access memory. The above elements may be provided on one or more circuit boards. The apparatus also comprises one or more wireless communication modules 14 via which the processor may connect to e.g. the distributed ledger network via a wireless interface and one or more intermediary communication networks. Each wireless communication module 14 typically comprises a baseband processor for controlling the generation and transmission of radio signals via a radio-frequency (RF) front end, and one or more antennas, and recovering data from outside radio transmissions reaching the antenna. The apparatus further comprises a user interface 16 by which a user can input commands such as specifying a desired journey destination. The apparatus further comprises visual and/or audio output units 18 by which to direct a driver to operate the vehicle to follow a consensus route as described below, and/or the vehicle may operate in an autonomous mode with the processor automatically controlling the operation of one or more actuators 20 to control the direction and speed of the vehicle so as to follow a consensus route.

It should be appreciated that the apparatus shown in Figures 2 and 3 described above may comprise further elements which are not directly involved with the embodiments of the invention described hereafter.

All operations described below that are carried out by the processors 4, 10 follow program code stored at memory 6, 12. In one embodiment, all operations carried out by the processor 4, 10 follow code of one or more smart contracts recorded in one or more blocks of a block chain (as one example of a distributed ledger), of which a copy is stored in local memory 6, 12. The code of each smart contract prescribes or dictates actions by one or more nodes of the group in response to one or more events.

Examples of operations at a single distributed ledger network node and at a vehicle according to a first embodiment, are described in detail below, but first the operation of the system as a whole according to the first embodiment is described.

According to one embodiment, vehicle route requests are initially sent to one or more nodes of the distributed ledger network (DLN), and then shared among the DLN nodes. A vehicle route request identifies the start and end points for a journey. The vehicle route request may also identify a public key recorded on the public chain, and a digital signature to verify that the vehicle route request originates from a device having the private key paired with the public key. The vehicle route request may also comprise other information such as a time stamp indicating when the journey is to be made, the number of people to make the journey in the vehicle, and/or other extra information that may facilitate the computation of an acceptable route.

Each node 2 computes its own individual route solution for each vehicle route request that it receives, and shares its own route solutions with other nodes of the DLN. Since each vehicle route request is shared among the DLN nodes 2, more than one node 2 computes a route solution for the same vehicle route request, and all the route solutions computed and shared by the nodes are recorded in the next block (N+1) of the block chain. The blockchain records a protocol/rule dictating that the consensus route solution for a vehicle route request is the route solution that is recorded the most times in the block. The consensus route solution established for a vehicle route request may be determined by inspection of this block N+1. Apparatus at the vehicle for which the vehicle route request was made may then control or direct the operation of the vehicle according to the consensus route solution. The blockchain may also be used to record information about whether the vehicle followed the consensus route solution, and record penalties and rewards for the vehicle accordingly, as discussed in more detail below.

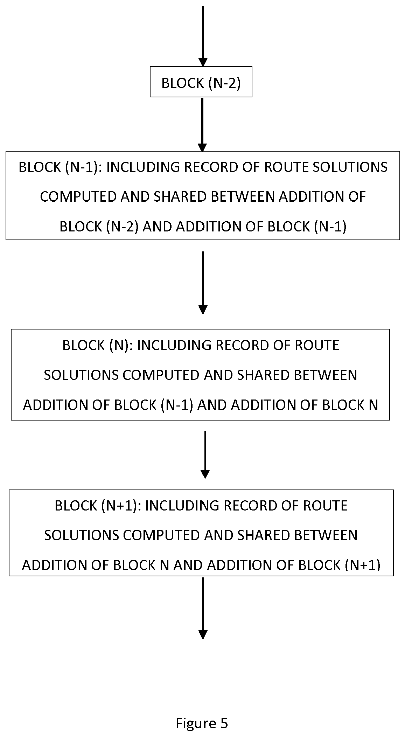

Figure 5 illustrates the propagation of a blockchain according to this first embodiment. Each block records the route solutions computed by the DLN nodes in the latest computing/sharing period. Each block in the blockchain is linked to the directly previous block by a record of the output of a hash function of the content of the previous block, thereby making the blockchain an effectively immutable record of consensus route solutions for vehicle route requests.

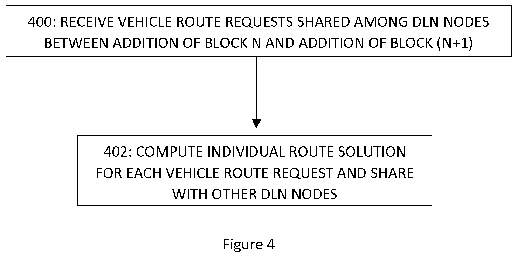

Figure 4 illustrates an example of operations of a processor 4 at a DLN node according to this first embodiment.

The processor 4 receives one or more vehicle route requests (STEP 400 of Figure 4). The processor 4 computes a route solution for each received vehicle route request, and shares the route solution with other DLN nodes via interface 8 for establishing a consensus route solution for the vehicle route request (STEP 402). The processor 4 computes the route solution according to a smart contract recorded in one or more blocks of the block chain of which a continuously updated copy is stored in local memory 6. The computation may involve an algorithm such as e.g. Dijkstra's algorithm, which uses information about graph vertices (e.g. road junctions) and graph edges (e.g. roads between junctions) of a multi-vertex graph to compute an optimal route between two vertices of the graph, wherein one or more parameters of the vertices and edges is updated according to e.g. the changing record of consensus route solutions on the blockchain. In a more advanced variation, the computation of a route solution at a DLN node 2 also takes into account information about route solutions computed by the node 2 earlier in the same computing/sharing period, which have not yet been (and which may never be) established as consensus route solutions. The computation of a route solution may also take into account other information recorded on the blockchain, such as e.g. information about vehicle type restrictions on some roads (graph edges). If the current block time (time at which a block was last added establishing consensus route solutions for one or more vehicle route requests) is denoted as t, and the state of the blockchain at that time t is denoted as S(t), then the route solution for a vehicle route request (transaction Tx) may be denoted as a function C (Tx, t+1) = C (Tx, S(t+1)), wherein S(t+1) includes S(t) and new route solutions having been computed at the node but not yet tested for consensus. Different DLN nodes 2 may compute different route solutions for the same vehicle route request (Tx), since not all nodes 2 may receive and process the same set of vehicle route requests in the same computing/sharing period, and/or in the same order. The node processor 4 controls the sharing of its computed route solutions with other DLN nodes 2 via interface 8, for recording in the next block of the blockchain to establish consensus route solutions for vehicle route requests. The node processor 4 additionally uses the consensus route solutions recorded in the current block for computing route solutions for new vehicle route requests in the next computing/sharing period.

According to another heuristic variation, the computation of a route solution also uses an output of a random number generator initialised by a seed such as the hash output for the latest block in the blockchain as an additional input. If the output of the random number generator is denoted by r, the route solution may be denoted as a function of three parameters: Tx, S(t+1) and r. The heuristic effect of this extra input is to quickly achieve acceptable consensus route solutions without excessive computation. The earlier described technique may be considered as the same kind of heuristic technique but where the dependence of the route solution on a random input is either absent or constant throughout the DLN for a given computing/sharing period.

In this first embodiment, each DLN node effectively casts a vote for a particular route solution by publishing the solution (computed according to an underlying optimisation algorithm) with a digital signature from the DLN node. The vote is decided by the underlying optimisation algorithm. This optimisation algorithm may have parameters that result in not every node finding/computing the same route solution. Examples of operations at a single distributed ledger network node 2 and at a vehicle according to a second embodiment, are described in detail below, but first the operation of the system as a whole according to the second embodiment is described.

According to another, second embodiment, vehicle route requests are initially sent to one or more nodes 2 of the distributed ledger network (DLN), and then shared among the nodes 2. Instead of the processor 4 at each node 2 then computing an individual route solution for each received vehicle route request, the processor 4 computes a group route solution according to a predetermined algorithm recorded in one or more blocks of the block chain. Each group route solution comprises a set of route solutions, one for each input transaction (vehicle route request) of a set received during a computing/sharing period. The processor 4 controls sharing of its computed group route solution with other DLN nodes 2 via interface 8, for recording in the next block of the blockchain. The nodes 2 of the DLN then share votes (as discussed in more detail below) about which of the group route solutions recorded in the latest block to adopt, for recordal in the next block of the block chain. The votes recorded in the next block of the blockchain indicate which group route solution is adopted as the consensus group route solution. The processor 4 at each DLN node 2 may compute and share more than one group route solution during the same computing/sharing period for recordal in the same block. The multiple group solutions may be for the same group of vehicle route requests (transactions) or e.g. for increasingly large groups of vehicle route requests (transactions) as the number of vehicle requests received at the node increases during the computing/sharing period.

In this second embodiment, as mentioned above, voting is done after all the group solutions are published. The voting may be based on a cost function that measures how good each solution is, based on one or more parameters that may differ between nodes. For example, one or more DLN nodes may be controlled by one or more cargo companies, and one or more other DLN nodes may be controlled by one or more city councils, and the parameters used by these different nodes to measure how good each published route solution is may be very different. A node controlled by a cargo company may be configured to vote for the one of the published route solutions that minimizes the total travel time to deliver cargo. On the other hand, a node controlled by a city council may be configured to vote for the one of the published route solutions that minimizes carbon dioxide emissions (gram CO2 emitted) in their city.

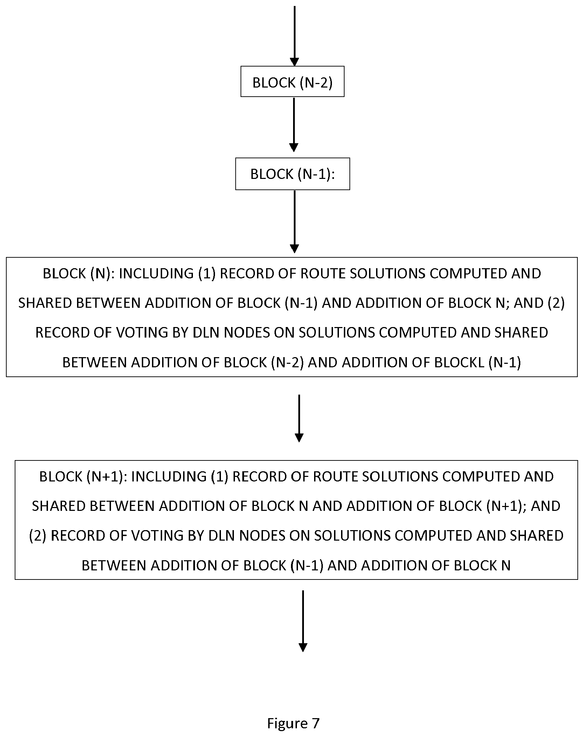

Figure 7 illustrates the propagation of the blockchain according to this second embodiment. Each block records the computed group solutions in the most recent computing/sharing period, and also the votes cast for the computed group solutions recorded in the directly preceding block. Again, each block is linked to the directly previous block by the output of a hash function of the content of the previous block, whereby the blockchain provides an effectively immutable record of the consensus route solutions for vehicle route requests.

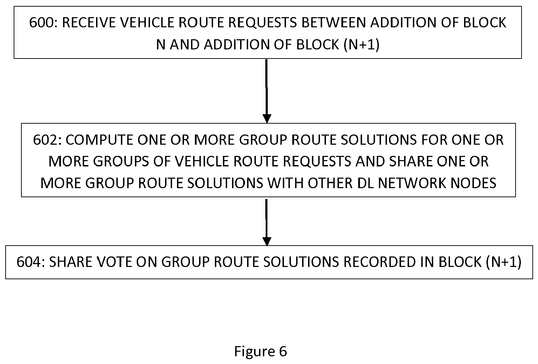

Figure 6 illustrates an example of operations at a processor of a DLN node 2 according to the second embodiment.

The processor 4 receives one or more vehicle route requests (STEP 600 of Figure 6). The processor 4 computes a group route solution for a group of received vehicle route requests, and controls sharing of the group route solution with other DLN nodes 2 via interface 8, for establishing a consensus group route solution (STEP 602 of Figure 6). Computation of a group route solution is done according to one or more pre-determined algorithms recorded in one or more blocks of the blockchain. If the current block time (time at which a block was last added establishing consensus route solutions for vehicle route requests) is denoted as t, and the group of N transactions are denoted as Tx1, Tx2, Tx3 ...... TxN, then the group route solution may be denoted as a function C = C (t+1, r, Tx1, Tx2, Tx3.... TxN), where r is a random input which may be generated in the same way as mentioned for the first embodiment. The node processor 4 may continue to compute and share one or more further group route solutions in the same computing/sharing period, either for the same set of transactions (vehicle route requests) or for different (e.g. larger) sets of transactions.

After the group route solutions computed by the node processor 4 and processors at other nodes 2 are recorded in a new block of the block chain, the node processor 4 selects one of the group route solutions, and controls the sharing of information about its selection with the other DLN nodes via interface 8, for recording in the next block of the block chain. The group route solution with the most votes recorded in the next block of the block chain is adopted as the consensus route solution; and vehicles are incentivised to comply with the consensus route solution, by e.g. making compliance rewards and/or imposing non-compliance penalties, as discussed in more detail below.

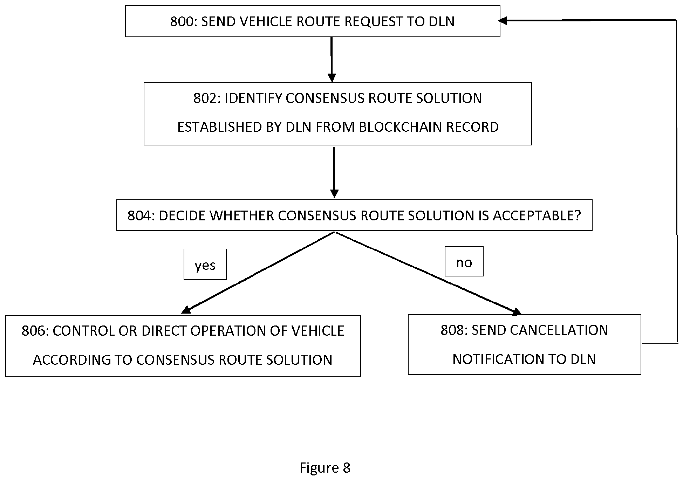

Figure 8 illustrates an example of operations at a processor 10 for a vehicle. Based e.g. on a user input via a user interface 16, the vehicle processor 10 controls the sending (e.g. via radio communication module 14) of a vehicle route request (transaction) to one or more DLN nodes 2 (STEP 800). The vehicle processor 10 monitors the blockchain, and identifies the consensus route solution established for the vehicle route request (STEP 802). If the vehicle processor 10 determines that the consensus route solution is acceptable (e.g. based on user input or automatically on the basis of one or more predetermined criteria stored in local memory 12), the vehicle processor 10 stores the consensus route in local memory 12. The vehicle processor 10 may direct a driver of the vehicle according to the consensus route stored in memory 12 using video/audio module 18 (STEP 804). Alternatively, if the vehicle is configured for operation in an autonomous mode, the vehicle processor 10 controls the operation of vehicle actuators 20 to control the speed and direction of the vehicle according to the consensus route solution (STEP 804). On the other hand, if the vehicle processor 10 determines that the consensus route is not acceptable, the vehicle processor 10 controls the sending of a route cancellation transaction via radio communication module 14 to one or more DLN nodes 2 (which cancellation transaction is then recorded in a block of the block chain) (STEP 808), and controls the sending via radio transmission module 14 of a new vehicle route request with e.g. a change in one or more parameters such as departure or arrival time (STEP 800).

In each of the embodiments mentioned above, the computation of route solutions may take into account real time traffic information recorded in one or more blocks of the blockchain. In response to changes in traffic conditions (e.g. car accidents, roadworks etc.), the DLN nodes 2 may also trigger the cancellation of effected existing consensus route solutions, and the computation and sharing of new, replacement route solutions. This diversion of vehicles from existing consensus route solutions may be done before vehicles embark on journeys according to existing consensus route solutions, or when vehicles have already begun journeys according to existing consensus route solutions.

As mentioned above, vehicles may be incentivised to comply with consensus route solutions using non-compliance penalties and compliance rewards. For example, a shared pool of funds (e.g. funded by user subscriptions) and/or income from non-compliance penalties may be used to reward compliance with consensus route solutions.

One implementation example involves processors at vehicles operating under the system continuously monitoring the location of other vehicles operating under the system (by e.g. detection of radio transmissions by other vehicles, and/or visual identification of registration plates of other vehicles), and controlling the sending of location reports to one or more DLN nodes 2 in accordance with a smart contract recorded in one or more blocks of the blockchain. If a consensus is established among the DLN nodes 2 that a vehicle is following a consensus route solution, no action is taken or the award of a compliance reward for the vehicle is recorded on the blockchain. On the other hand, if a consensus is established among the DLN nodes 2 that a vehicle is not following a consensus route solution (e.g. has deviated from a consensus route solution), a non-compliance penalty is recorded for the vehicle on the blockchain. For example, the blockchain may record the transfer of a predetermined amount from the individual account for the non-compliant vehicle to a system account which funds compliance rewards.

Vehicles may be incentivised to report location information about other vehicles to the network, e.g. by way of rewards for providing data. In order to deter vehicles from making false location reports, one or more conditions may be attached to the award of rewards, such as a condition that a reward is only awarded for location reports that concur within a predetermined degree of accuracy with other location reports for the same vehicle, such that outlier reports are not rewarded.

In another embodiment, vehicle route requests instead specify a particular route (including departure time, and route details), and the route solutions computed and shared by the DLN nodes instead comprise a charge/price for the route. Again, a consensus solution (consensus charge) may be established as set out above. Vehicles have the option to pay the consensus price for the route, or cancel the transaction and make a new vehicle route request with a change to one or more parameters, such as journey start time. Alternatively, vehicles can be invited to make bids at or above a consensus charge for the route, which bids are recorded on the blockchain. This system may encourage some vehicles to specify an off-peak time (a time outside the expected busiest hours for the route) for the journey in the vehicle route request, thereby helping to spread the traffic for the route throughout the day.

The distributed ledger may be a permissioned blockchain, with each DLN node 2 able to identify itself as a permissioned node by means of a public key recorded on the blockchain, and by means of including a digital signature in communications between nodes based on the private key paired with the public key. In one example, all of the DLN nodes 2 may have authority to decide on which route solutions are included in a block, but in another example, this authority may be limited to only some DLN nodes 2. Some or all of the DLN nodes 2 may have authority to grant certification power to e.g. car manufacturers to certify vehicles to use the system. Some or all of the DLN nodes 2 may have authority to modify the algorithms recorded in one or more blocks of the blockchain, and/or one or more of the parameters to be used for road usage scheduling.

Alternatively, the distributed ledger may be a permissionless blockchain, with the addition of blocks governed by e.g. proof-of-work, proof-of-stake or other similar consensus mechanisms.

Use of the system may be limited to vehicle route requests including a digital signature based on a private-public key pair of which the public key is recorded on the blockchain. As mentioned above, some or all nodes may have authority to certify new vehicles by recording new public keys for those vehicles on the blockchain. Such nodes may be controlled by car manufacturers, garages and/or other legal entities. One or more smart contracts recorded in one or more blocks of the block chain may require the approval of two or more governing nodes (e.g. a node controlled by a car manufacturer and a node controlled by another kind of legal entity) for the inclusion of any new public key on the blockchain. The blockchain in which public keys are recorded may be separate to the one on which computed solutions and votes are recorded in the embodiments described above.

The above-described techniques facilitate management of traffic on any set of roads by having vehicles commit to agreed routes in advance. If necessary, honouring a commitment to an agreed route can be incentivised by awarding compliance rewards and/or imposing non-compliance penalties. The use of a blockchain with hash links between blocks provides an effectively immutable record of the routes agreed for vehicles, and peer verification of vehicle location provides a reliable check on whether a vehicle is following the agreed route. This verification can be made by using short range communication between the vehicles, sensors, or image recognition (e.g. color, brand model, plate number...).

Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method, comprising: receiving at a node of a distributed ledger network one or more vehicle route requests shared among nodes of the distributed ledger network; computing one or more route solutions for said one or more vehicle route requests; and sharing said one or more route solutions with other nodes of said distributed ledger network, for establishing a consensus route solution for one or more of said one or more vehicle route requests.

2. A method according to claim 1, wherein a consensus route solution for a vehicle request comprises the route solution computed and shared by the highest number of distributed ledger network nodes within a predetermined period of sharing time.

3. A method according to claim 1, wherein route solutions computed and shared by distributed ledger network nodes within a predetermined period of sharing time are recorded in a block of a block chain, and a consensus route solution for a vehicle request comprises the route solution recorded the most times within said block.

4. A method according to any of claims 1 to 3, wherein said computing comprises computing an individual route solution for each vehicle route request.

5. A method according to claim 1, wherein said computing comprises computing a group route solution for a plurality of said vehicle route requests, and wherein the consensus route solution for a vehicle request comprises the route solution forming part of a group route solution voted for by the highest number of distributed ledger network nodes within a predetermined period of voting time from a plurality of group route solutions computed and shared between the distributed ledger network nodes within a predetermined period of sharing time.

6. A method according to claim 5, wherein votes for group route solutions are recorded in a block of a blockchain, and the consensus route solution for a vehicle request comprises the route solution having the most votes recorded in said block.

7. A method according to any preceding claim, wherein computing said one or more route solutions uses a plurality of inputs, at least one input comprising an output of a random number generator, and wherein the method comprises initialising the random number generator using the same seed as other distributed ledger nodes during the same predetermined period of sharing time.

8. A method according to any preceding claim, further comprising updating the local copy of the distributed ledger with information regarding a consensus among the distributed ledger network nodes about whether a vehicle was observed to comply with the consensus route solution established for the vehicle route request for the vehicle.

9. A method according to claim 8, wherein said consensus among the distributed ledger network nodes about whether a vehicle was observed to comply with the consensus route solution established for the vehicle route request for the vehicle is based on recorded observations by other vehicles about the location of the vehicle.

10. A method according to claim 8 or claim 9, further comprising updating the local copy of the distributed ledger with information about application of a penalty to a vehicle that, according to a consensus among the distributed ledger nodes, did not comply with the consensus route solution established for the vehicle route request for the vehicle.

11. A method according to any preceding claim, wherein said computing is based at least on information recorded in a local copy of a distributed ledger, said information comprising at least information about a consensus achieved between nodes of said distributed ledger network on routes for earlier vehicle route requests processed by the distributed ledger network.

12. A method comprising: controlling or directing the operation of a vehicle to follow a route to a destination point, wherein the route is a consensus route established between nodes of a distributed ledger network for a vehicle route request for the vehicle based on: sharing of the vehicle route request between nodes of a distributed ledger network, computing of respective route solutions at the nodes of the distributed ledger network, and sharing of the computed route solutions between nodes of said distributed ledger network.

13. Apparatus, comprising: means for receiving at a node of a distributed ledger network one or more vehicle route requests shared among nodes of the distributed ledger network; means for computing one or more route solutions for said one or more vehicle route requests; and means for sharing said one or more route solutions with other nodes of said distributed ledger network, for establishing a consensus route solution for one or more of said one or more vehicle route requests.

14. Apparatus comprising: means for controlling or directing the operation of a vehicle to follow a route to a destination point, wherein the route is a consensus route established between nodes of a distributed ledger network for a vehicle route request for the vehicle based on: sharing of the vehicle route request between nodes of a distributed ledger network, computing of respective route solutions at the nodes of the distributed ledger network, and sharing of the computed route solutions between nodes of said distributed ledger network.

15. A computer program product comprising program code means which when loaded into a computer controls the computer to: perform the method of any one of claims 1 to 12.
